# EUROPEAN PATENT APPLICATION

(11) **EP 4 592 032 A1**
(43) Date of publication of application: **30.07.2025**
(21) Application number: 24153526.9
(22) Date of filing: 23.01.2024
(51) Int. Cl.: B25F 5/00

(54) **POWER TOOL**

(71) Applicant: Techtronic Cordless GP, Anderson, SC 29621 (US)
(72) Inventor: Jiang, Xin, Dongguan (CN); Luo, Hai Ming, Dongguan (CN); Gao, Yong Sheng, Hong Kong (HK); Wen, Chao, Dongguan (CN)
(74) Representative: Zimmermann & Partner Patentanwälte mbB

(57) **Abstract**

A power tool comprises a working component, a motor for driving the working component, a power source connector and a power controller for controlling the motor, where the power controller is configured to retrieve information about a detachable power source connected to the power source connector, and control the motor to operate in one of a plurality of different modes according to the retrieved information of the detachable power source.

## Description

### FIELD OF THE DISCLOSURE

The present disclosure relates to power tools and, in particular, to a power tool which receives a detachable power source.

### BACKGROUND OF THE DISCLOSURE

Power tools may be built with an internal power source, e.g. an integrated rechargeable battery, or a detachable power source such as a removable battery pack or a removable power cable with a DC or AC supply.

Such detachable power sources cause inherent problems where a variety of power sources are compatible with the power source connector. For example, removable power packs with a range of capacities or even different voltage ratings may be compatible with the same power source connector, or a power lead with a range of input voltages may be plugged into the same power lead connector socket.

This variation can lead to problems such as a short working time or overtemperature events. In some examples, if a user selects a smaller capacity battery pack with a smaller footprint and lower weight, they may unintentionally sacrifice usability in the form of running time for the tool. In other examples, the user may unintentionally select an incorrect power supply lead from a variety of options with a range of voltage/power ratings, risking the safety of the tool due to overloading and overtemperature or the battery and/or motor.

It is an object of the present disclosure to address or at least partially ameliorate some of the above problems of the current approaches.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided a power tool comprising a working component, a motor for driving the working component, a power source connector and a power controller for controlling the motor, where the power controller is configured to retrieve information about a detachable power source connected to the power source connector, and control the motor to operate in one of a plurality of different modes according to the retrieved information of the detachable power source.

The retrieved information of the detachable power source may include a capacity of the detachable power source.

The retrieved information of the detachable power source may include a number of cells of the detachable power source.

The retrieved information of the detachable power source may include a type, model or serial number of the detachable power source.

The power tool may include a memory configured to store a lookup table.

The power controller may determine the mode for operating the motor by searching for the retrieved information of the detachable power source in the lookup table.

Each of the plurality of modes may include a power setting for the motor.

The power setting may include a high speed and a low speed for the motor.

The power controller may control the motor to operate in a default mode if the information of the detachable power source cannot be retrieved or if the retrieved information of the detachable power source is not recognised.

In accordance with a second aspect of the present disclosure, there is provided a method for controlling the operation of a motor of a power tool, the method comprising: retrieving information about a detachable power source connected to a power source connector of the power tool; controlling the motor to operate in one of a plurality of different modes according to the retrieved information of the detachable power source, and driving a working component of the power tool using the motor operating in the one of the plurality of different modes.

Retrieving information about the detachable power source may include retrieving a capacity of the detachable power source.

Retrieving information about the detachable power source may include retrieving a number of cells of the detachable power source.

Retrieving information about the detachable power source may include retrieving a type, model or serial number of the detachable power source.

The method may include determining the mode for operating the motor by searching for the retrieved information of the detachable power source in a lookup table.

Each of the plurality of modes may include a power setting for the motor.

The power setting may include a high speed and a low speed for the motor.

The method may include controlling the motor to operate in a default mode if the information of the detachable power source cannot be retrieved or if the retrieved information of the detachable power source is not recognised.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
Figure 1 is a schematic diagram showing a power tool according to an embodiment.
Figure 2 is an image showing different types of detachable power source.
Figure 3 is a table showing information about a detachable power source according to an embodiment.
Figure 4 is a table showing information about a detachable power source according to an embodiment.
Figure 5 is an operation flowchart showing a process executed by a power tool according to an embodiment.
Figure 6a is a schematic diagram showing a power tool according to an embodiment.
Figure 6b is a schematic diagram showing a power tool according to an embodiment.
Figure 7 is a flowchart showing a method for controlling the operation of a motor of a power tool according to an embodiment.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

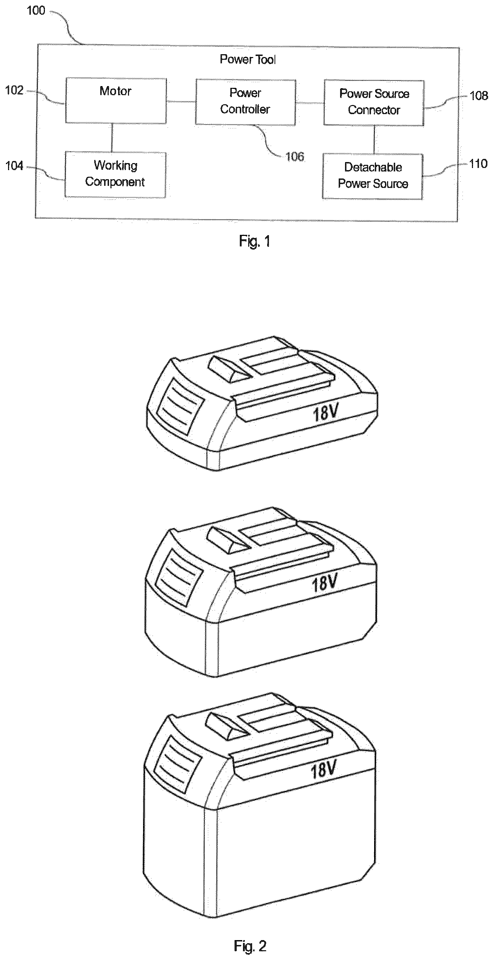

Figure 1 is a schematic diagram showing a power tool 100 according to an embodiment. The power tool 100 comprises a working component 104, a motor 102, a power source connector 108 and a power controller 106. The power tool 100 may be any power tool 100 including, but not limited to, handheld, carried, or pushed/driven tools. Examples include a line trimmer, chainsaw, power drill, lawnmower, pillar drill, leaf blower, snow-blower, etc.

The working component 104 may be configured to perform a working task when driven by the motor 102. For example, the working component 104 may include a spool and line for a line trimmer, a chain for a chainsaw, a chuck and bit for a power drill, etc.

The motor 102 is configured to drive the working component 104. The motor 102 may be a DC or AC, brushed or brushless motor. The motor 102 may be configured to operate at any suitable input voltage, for example, 9V, 12V, 18V, 20V or 40V DC, 110V or 240V AC, or any other suitable voltage rating.

The power source connector 108 is configured to receive a detachable power source. The detachable power source may be a standalone power storage e.g. a cell, battery, power pack, voltaic pile, capacitor or supercapacitor. A battery of any suitable chemistry may be used, for example, lithium ion, nickel cadmium, alkaline, mercury, silver oxide, lead-acid, etc. Alternatively, the detachable power source may be an external power supply, for example, a mains AC supply at 110V or 240V, an external DC power supply e.g. from an external power pack or a mains connected DC transformer power supply, or from a generation source (e.g. solar panel).

The detachable power source may include an internal data store to retain information of the detachable power source. For example, the internal data store may include information related to parameters, characteristics or usage of the detachable power source, as will be described in more detail below.

Figure 2 is an image showing different types of detachable power source. As shown, the detachable power source may be a detachable battery pack. The detachable power source may be an 18V battery pack. A capacity of the battery pack and, in some cases, a physical size of a battery pack casing, may depend on the number of cells in the battery pack. As shown, battery packs of various sizes and capacities may be provided with a common connector. In this way, a power tool 100 can be provided with a detachable power source having one of a number of possible sizes and capacities. The battery pack may therefore be selected by the user based on any of a number of factors e.g. intended use, size/weight, cost, availability etc. As an example, the three 18V battery packs shown have capacities of 2Ah, 4Ah, and 12Ah, from the smallest to the largest battery pack. In other examples, the battery pack may have a lower capacity e.g. 1.5Ah, an intermediate capacity in the range e.g. 5Ah or 9Ah, or a higher capacity e.g. 20Ah or higher.

The power source connector 108 may include one or more electrical contacts arranged to abut with corresponding contacts on the received detachable power source. The power source connector 108 may be configured to provide power from the detachable power source to one or more components of the power tool 100 e.g. the motor 102. The power source connector 108 may include one or more data contacts arranged to abut with corresponding contacts on the received detachable power source. In this way, the power source connector 108 may receive information stored on an internal data store of the detachable power source.

The power controller 106 is configured to control the motor 102. The power controller 106 is configured to retrieve information about the detachable power source connected to the power source connector 108. The power controller 106 may retrieve information stored on an internal data store of the detachable power source via one or more data contacts of the power source connector 108.

Alternatively, the power controller 106 may use means for sensing information about the detachable power source. Such means may be associated with the power source connector 108 or may be separately provided. The power controller 106 may use optical means, for example, a image sensor to read a barcode, OR code, text or characters or any other indicia printed or otherwise provided on the detachable power source. The power controller 106 may use tactile means, e.g. one or more contact switches arranged to sense a pattern or protrusions or other tactile indicator formed on the casing of the detachable power source. The power controller 106 may use electromagnetic means, e.g. an RFID tag or short/range communication connection with an internal data store (such as NFC or Bluetooth). Alternatively, the power controller 106 may use electric means for directly measuring one or more parameters of the detachable power source, e.g. measuring a voltage load, capacity, etc.

The power controller 106 is configured to control the motor 102 to operate in one of a plurality of different modes according to the retrieved information of the detachable power source.

In this way, the motor 102 can be automatically controlled in a way which improves safety, efficiency and usability. The motor 102 can be controlled to operate in a mode which prevents or reduces undesirable events such as a short working time or overtemperature events. In some examples, by selecting the mode based on the detachable power source, the user can select a smaller capacity battery pack with a smaller footprint and lower weight, without sacrificing usability in the form of running time for the tool. In some examples, by selecting the mode based on the detachable power source, the user can use variety of power sources with a range of voltage/power ratings, without sacrificing safety of the tool due to overloading and overtemperature or the battery and/or motor 102.

The retrieved information of the detachable power source may include a capacity of the detachable power source.

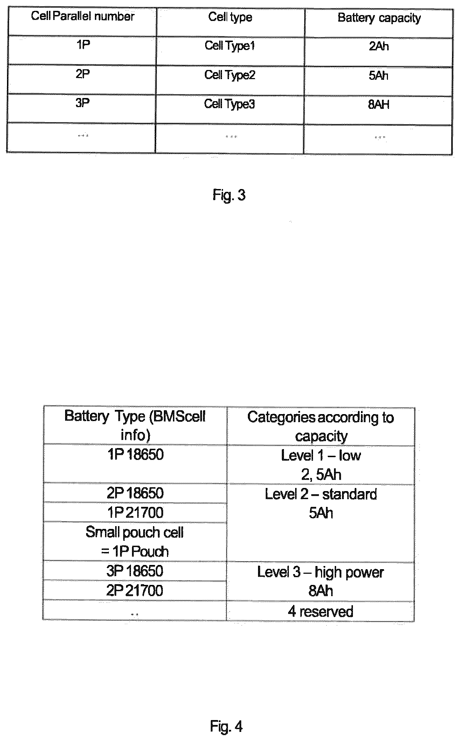

Figure 3 is a table showing information about a detachable power source according to an embodiment. The table shown may be an example of information stored on an internal data store of the detachable power source. The information stored on the internal data may be retrieved via one or more data contacts of the power source connector 108.

The retrieved information of the detachable power source may include a number of cells of the detachable power source. As shown, the battery capacity may be provided directly. In some examples, only the number of cells and/or the cell type may be provided, allowing the power controller 106 to determine the battery capacity indirectly.

The retrieved information of the detachable power source may include a type, model or serial number of the detachable power source.

The power tool 100 may include a memory configured to store a lookup table.

Figure 4 is a table showing information about a detachable power source according to an embodiment. The table shown may be an example of a lookup table stored in a memory of the power tool 100. The table may include a specific number of battery types or models. The table may be limited by the types/models of batteries which are physically compatible with the power source connector 108.

The power controller 106 may determine the mode for operating the motor 102 by searching for the retrieved information of the detachable power source in the lookup table. As shown, the lookup table may include a correspondence between identifying information of the detachable power source and a capacity associated with the identified detachable power source. For example, a type, model or serial number of the detachable power source may be associated with a corresponding capacity. A specific capacity value may be provided or a capacity category based on a range of values may be provided e.g. low capacity for 0-5Ah, standard capacity for 5Ah-8Ah, high capacity for 8Ah or more.

Each of the plurality of modes may include a power setting for the motor 102. For example, the power controller 106 may control the motor 102 to operate with a lower power setting for a detachable power source having a lower capacity. In this way, the running time of the power tool 100 can be improved for detachable power sources having a lower capacities, while a high power setting can be exploited where the capacity allows. The mode may be selected based on the capacity value or based on a determined category which includes a range of capacities.

In another example, the power controller 106 may control the motor 102 to operate with a lower power setting for a detachable power source having a higher voltage or power rating. In this way, the power controller 106 can restrict overloading of the motor 102 and a potential overtemperature event.

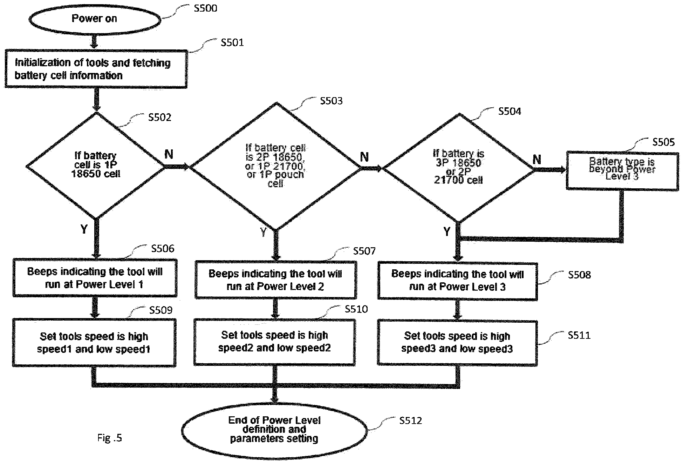

Figure 5 is an operation flowchart showing a process executed by a power tool 100 according to an implementation. At step S500 the power to the tool is turned on, e.g. by activating a power on switch or by connecting a detachable power source to the power source connector 108.

At step S501 the power tool 100 is initialised and battery cell information is retrieved. For example, the battery cell type, model or serial number may be retrieved via one or more data contacts of the power source connector 108.

The power controller 106 may determine the mode for operating the motor 102 by searching for the retrieved information of the detachable power source in the lookup table. For example, the power controller 106 may sequentially check each entry of the table shown in Figure 4.

At step S502, the power controller 106 checks if the battery cell is a 1P 18650 cell. That is, a battery corresponding to category 1. If yes, the power controller 106 controls the motor 102 to operate at "Power Level 1" and proceeds to step S506.

If not, at step S503, the power controller 106 checks if the battery cell is a 2P 18650 cell, 1P 21700 cell or 1P pouch cell. That is, a battery corresponding to category 2. If yes, the power controller 106 controls the motor 102 to operate at "Power Level 2 and proceeds to step S507.

If not, at step S504, the power controller 106 checks if the battery cell is a 3P 18650 cell or 2P 21700 cell. That is, a battery corresponding to category 3. If yes, the power controller 106 controls the motor 102 to operate at "Power Level 3" and proceeds to step S508.

The power controller 106 may be configured to generate an output signal according to the operation mode of the motor 102. The output signal may include, for example, a sound output (where the power level is indicated by a certain pitch or number of beeps), or a visual output (where the power level is indicated by a certain colour or number of lights, or a text display).

At step S506, the power controller 106 outputs beeps indicating the tool will run at Power Level 1 and proceeds to step S509.

At step S507, the power controller 106 outputs beeps indicating the tool will run at Power Level 2 and proceeds to step S510.

At step S508, the power controller 106 outputs beeps indicating the tool will run at Power Level 3 and proceeds to step S511.

The power setting may include a high speed and a low speed for the motor 102. The power setting may set the motor speed with a predefined tolerance e.g. +/-5%.

For example, for Power Level 3, the high motor speed may be 6200RPM and the low motor speed may be 4600RPM. For Power Level 2, the high motor speed may be 5500RPM and the low motor speed may be 4600RPM. For Power Level 1, the high motor speed may be 4500RPM and the low motor speed may be 3800RPM.

At step S509, the power controller 106 sets the speeds of the power tool 100 as high speed 1 and low speed 1, which may correspond to 4500RPM and 3800RPM respectively, and proceeds to step S512.

At step S510, the power controller 106 sets the speeds of the power tool 100 as high speed 2 and low speed 2, which may correspond to 5500RPM and 4600RPM respectively, and proceeds to step S512.

At step S511, the power controller 106 sets the speeds of the power tool 100 as high speed 3 and low speed 3, which may correspond to 6200RPM and 4600RPM respectively, and proceeds to step S512.

Alternatively, or in addition, the power setting may include current level limit, e.g. 80A at Power level 2 or 100A at Power Level 3.

The power controller 106 may be configured to stop the power tool 100 if the battery capacity is too low. For example, the power setting for Power Level 1 may be set to zero i.e. stopping the tool.

The power controller 106 may control the motor 102 to operate in a default mode if the information of the detachable power source cannot be retrieved or if the retrieved information of the detachable power source is not recognised. The default mode of operation may correspond to the highest power setting.

That is, if the power controller 106 determines that the battery cell is not a 3P 18650 cell or 2P 21700 cell at step S504, then at step S505 the power controller 106 determines that the battery type is beyond Power Level 3. The power controller 106 controls the motor 102 to operate at Power Level 3 and proceeds to step S508
Alternatively, the default mode of operation may control the motor 102 not to operate if the information of the detachable power source cannot be retrieved or if the retrieved information of the detachable power source is not recognised

The power level definition and parameters setting ends at step S512.

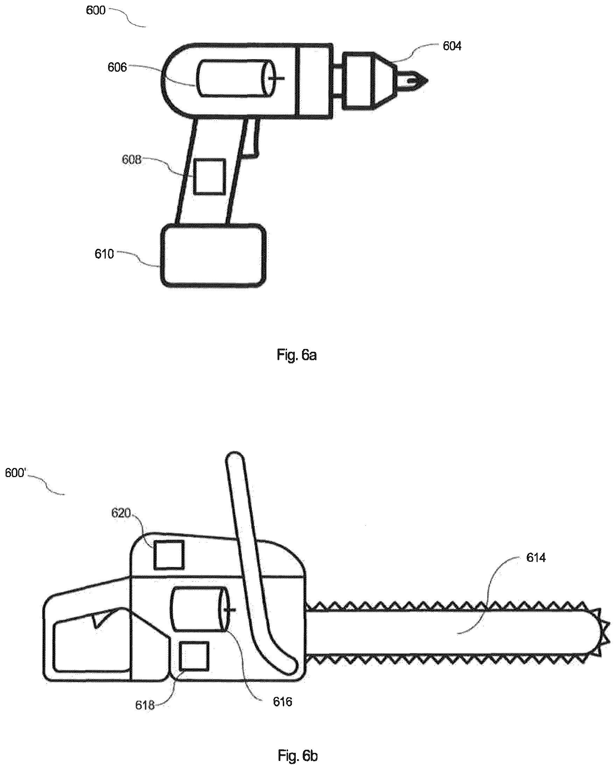

Figure 6a is a schematic diagram showing a power tool 600 according to an embodiment. The power tool 600 is a handheld power drill comprising a chuck 604 as a working component, a motor 606, a detachable power source 610 received at a power source connector (not shown) and a power controller 608.

Figure 6b is a schematic diagram showing a power tool 600' according to an embodiment. The power tool 600' is a handheld chainsaw comprising a blade and chain 614 as a working component, a motor 616, a detachable power source 620 received at a power source connector (not shown) and a power controller 618.

In addition to the examples shown in Figures 6a and 6b, the power tool may be embodied as, for example, a hedge trimmer, string trimmer, lawnmower, blower, washer, vacuum cleaner or any other suitable tool or appliance.

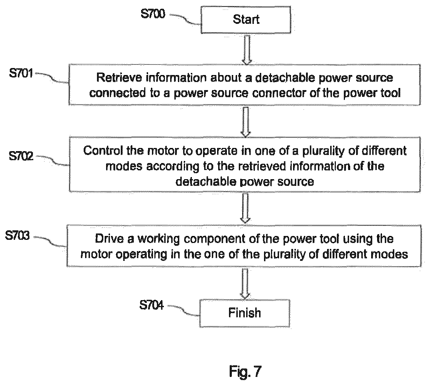

Figure 7 is a flowchart showing a method for controlling the operation of a motor of a power tool according to an embodiment. The method starts at step S700.

At step S701, information is retrieved about a detachable power source connected to a power source connector of the power tool.

At step S702, the motor is controlled to operate in one of a plurality of different modes according to the retrieved information of the detachable power source.

At step S703, a working component of the power tool is driven using the motor operating in the one of the plurality of different modes.

The method finishes at step S704.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Methods according to the above-described examples can be implemented using computerexecutable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A power tool comprising a working component, a motor for driving the working component, a power source connector and a power controller for controlling the motor, wherein the power controller is configured to retrieve information about a detachable power source connected to the power source connector, and control the motor to operate in one of a plurality of different modes according to the retrieved information of the detachable power source.

2. The power tool of claim 1, wherein the retrieved information of the detachable power source includes a capacity of the detachable power source.

3. The power tool of claim 1 or claim 2, wherein the retrieved information of the detachable power source includes a number of cells of the detachable power source.

4. The power tool of any preceding claim, wherein the retrieved information of the detachable power source includes a type, model or serial number of the detachable power source.

5. The power tool of any preceding claim, further comprising a memory configured to store a lookup table, wherein the power controller is configured to determine the mode for operating the motor by searching for the retrieved information of the detachable power source in the lookup table.

6. The power tool of any preceding claim, wherein each of the plurality of modes includes a power setting for the motor.

7. The power tool of any preceding claim, wherein the power setting includes a high speed and a low speed for the motor.

8. The power tool of any preceding claim, wherein the power controller is configured to control the motor to operate in a default mode if the information of the detachable power source cannot be retrieved or if the retrieved information of the detachable power source is not recognised.

9. A method for controlling the operation of a motor of a power tool, the method comprising:
retrieving information about a detachable power source connected to a power source connector of the power tool;
controlling the motor to operate in one of a plurality of different modes according to the retrieved information of the detachable power source, and
driving a working component of the power tool using the motor operating in the one of the plurality of different modes.

10. The method for controlling the operation of the motor of claim 9, wherein retrieving information about the detachable power source includes retrieving a capacity of the detachable power source.

11. The method for controlling the operation of the motor of claim 9 or claim 10, wherein retrieving information about the detachable power source includes retrieving a number of cells of the detachable power source.

12. The method for controlling the operation of the motor of any one of claims 9 to 11, wherein retrieving information about the detachable power source includes retrieving a type, model or serial number of the detachable power source.

13. The method for controlling the operation of the motor of any one of claims 9 to 12, further comprising:
determining the mode for operating the motor by searching for the retrieved information of the detachable power source in a lookup table.

14. The method for controlling the operation of the motor of any one of claims 9 to 13, wherein each of the plurality of modes includes a power setting for the motor and, optionally, wherein the power setting includes a high speed and a low speed for the motor.

15. The method for controlling the operation of the motor of any one of claims 9 to 14, further comprising:
controlling the motor to operate in a default mode if the information of the detachable power source cannot be retrieved or if the retrieved information of the detachable power source is not recognised.
